(19) Europäisches Patentamt
European Patent Office
Office européen des brevets

(11) EP 4 477 686 A1

(12) **EUROPEAN PATENT APPLICATION**
published in accordance with Art. 153(4) EPC

(43) Date of publication:
**18.12.2024 Bulletin 2024/51**

(21) Application number: **23749645.0**

(22) Date of filing: **26.01.2023**

(51) International Patent Classification (IPC):
***C08G 64/06*** *(2006.01)*

(52) Cooperative Patent Classification (CPC):
**C08G 64/06**

(86) International application number:
**PCT/JP2023/002418**

(87) International publication number:
**WO 2023/149329 (10.08.2023 Gazette 2023/32)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **07.02.2022 JP 2022017293**

(71) Applicant: **Mitsubishi Chemical Corporation**
**Tokyo 100-8251 (JP)**

(72) Inventors:
- **KOMIYA, Yukinori**
  **Tokyo 100-8251 (JP)**
- **YOKOGI, Masashi**
  **Tokyo 100-8251 (JP)**

(74) Representative: **Hoffmann Eitle**
**Patent- und Rechtsanwälte PartmbB**
**Arabellastraße 30**
**81925 München (DE)**

# (54) POLYCARBONATE RESIN COMPOSITION

(57) A polycarbonate resin composition containing a carbonate structural unit (X) derived from an aromatic dihydroxy compound represented by the following formula (1), and a carbonate structural unit (Y) derived from an aromatic dihydroxy compound represented by the following formula (2), wherein the content of the carbonate structural unit (X) in 100 mol% of all carbonate structural units of the polycarbonate resin composition is 31.6 mol% or more. Alternatively, a polycarbonate resin composition containing a carbonate structural unit (X) derived from an aromatic dihydroxy compound represented by the following formula (1), and a carbonate structural unit (Y) derived from an aromatic dihydroxy compound represented by the following formula (2), wherein a molar ratio (Y)/(X) of the content of the carbonate structural unit (Y) to the carbonate structural unit (X) is 0.33 or more and 2.95 or less.

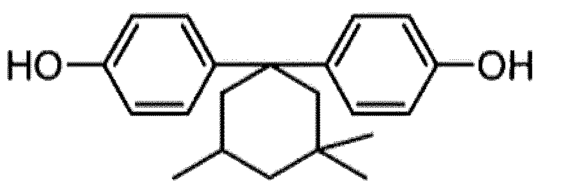

(1)

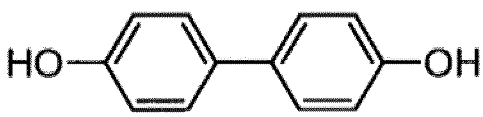

(2)

EP 4 477 686 A1

## Description

### Technical Field

The present invention relates to a polycarbonate resin composition. Specifically, the present invention relates to a polycarbonate resin composition that has excellent heat resistance and impact resistance, as well as excellent fluidity. The present invention also relates to an injection product and an extrusion molded product of this polycarbonate resin composition.

### Background Art

Polycarbonate resins have high mechanical strength, good electrical characteristics, and high transparency and are widely used as engineering plastics in various fields, such as electrical and electronic devices and automobiles. In recent years, in these application fields, thinner, smaller, and lighter formed products have been developed, and further performance improvement of forming materials has been required.

Known polycarbonate resins prepared using bisphenol A as a raw material have insufficient heat resistance among these required characteristics. Therefore, it has become desirable to develop polycarbonate resins having high impact resistance and high heat resistance. Several proposals have been made to develop polycarbonate resins with high heat resistance.

Patent Literature 1 describes a polycarbonate resin having excellent heat resistance which is made of 1,1-bis(4-hydroxyphenyl)-3,3,5-trimethylcyclohexane.

Patent Literature 2 describes a polycarbonate resin which is formed by terpolymerization of 1,1-bis(4-hydroxyphenyl)-3,3,5-trimethylcyclohexane, 4,4'-dihydroxy-diphenyl, and 2,2-bis(4-hydroxyphenyl)propane.

Other than polycarbonate resins, polyarylate resins, typified by U polymer, have excellent heat resistance and impact resistance, but they have had problems with fluidity (moldability).

### Citation List

### Patent Literature

PTL1: European Patent 0359953 B1
PTL2: DE 19646401 A1

### Summary of Invention

### Technical Problem

As a result of the research conducted by the present inventor, it was found that the above-mentioned conventional technology has the following problems.

In Patent Literature 1, high heat resistance can be achieved by using 1,1-bis(4-hydroxyphenyl)-3,3,5-trimethylcyclohexane, but impact resistance is not sufficient.

In Patent Literature 2, although the heat resistance has been improved by containing 1,1-bis(4-hydroxyphenyl)-3,3,5-trimethylcyclohexane, the heat resistance and impact resistance are still insufficient.

Although polyarylate resins represented by U polymer have excellent heat resistance and impact resistance, they have problems with fluidity (moldability).

An object of the present invention is to provide a polycarbonate resin composition that has excellent heat resistance, impact resistance, and fluidity.

### Solution to Problem

The present inventor has discovered that a polycarbonate resin composition containing carbonate structural units derived from two specific aromatic dihydroxy compounds in a specific ratio can meet the above object.

The gist of the present invention are in the following [1] to [10] .

[1] A polycarbonate resin composition comprising a carbonate structural unit (X) derived from an aromatic dihydroxy compound represented by the following formula (1), and a carbonate structural unit (Y) derived from an aromatic

dihydroxy compound represented by the following formula (2),
wherein the content of the carbonate structural unit (X) in 100 mol% of all carbonate structural units of the polycarbonate resin composition is 31.6 mol% or more.

[Chem. 1]

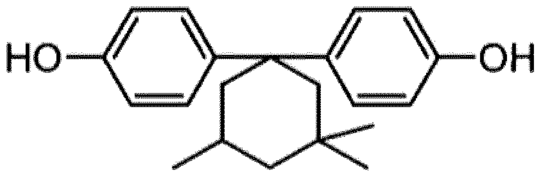

(1)

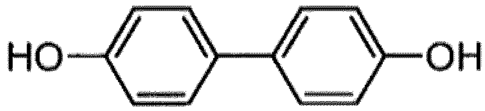

(2)

[2] A polycarbonate resin composition comprising a carbonate structural unit (X) derived from an aromatic dihydroxy compound represented by the following formula (1), and a carbonate structural unit (Y) derived from an aromatic dihydroxy compound represented by the following formula (2),
wherein a molar ratio (Y)/(X) of the content of the carbonate structural unit (Y) to the carbonate structural unit (X) is 0.33 or more and 2.95 or less.

[Chem. 2]

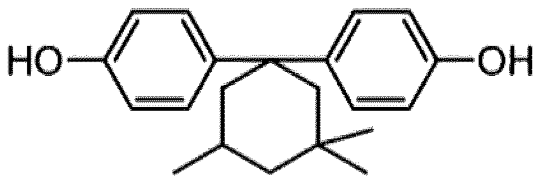

(1)

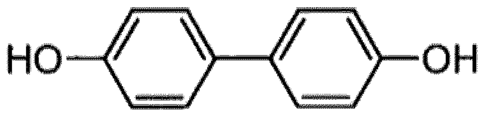

(2)

[3] The polycarbonate resin composition according to [1] or [2], wherein the content of the carbonate structural unit (Y) in 100 mol% of all carbonate structural units is 15 mol% or more.
[4] The polycarbonate resin composition according to any one of [1] to [3], having a glass transition temperature of 185°C or higher determined, in accordance with ISO 3146, by measuring the amount of heat by heating at a heating rate of 20°C/min using a differential scanning calorimeter.
[5] The polycarbonate resin composition according to any one of [1] to [4], having a notched Izod impact strength value of 60 J/m or more as measured by a method in accordance with ASTM D256.
[6] The polycarbonate resin composition according to any one of [1] to [5], having a flow value (Q value) of 2.0 (unit: $10^{-2}cm^3$/sec) or more measured using a raised-type flowtester in accordance with JIS K7210-1 Annex JA, at 320°C and 160kgf.
[7] The polycarbonate resin composition according to any one of [1] to [6], having a viscosity-average molecular weight (Mv) of 13,000 or more and 33,000 or less.
[8] An injection molded product obtained by injection molding the polycarbonate resin composition according to any one of [1] to [7].
[9] An extrusion molded product obtained by extrusion molding the polycarbonate resin composition according to any

one of [1] to [7].

[10] The extrusion molded product according to [9], wherein the extrusion molded product is a sheet or a film.

Advantageous Effect of Invention

According to the present invention, it is possible to provide a polycarbonate resin composition that has excellent heat resistance and impact resistance, as well as excellent fluidity.

Since the polycarbonate resin composition of the present invention has good impact resistance, heat resistance, and modability, it can be widely used as a material for manufacturing parts in automobiles, electrical and electronic materials, and other industrial fields..

Description of Embodiments

The present invention is described in detail in the following embodiments and examples. The present invention is not limited to these embodiments and examples.

In the present specification, unless otherwise specified, numerical values before and after "to" mean that these values are included as a lower limit and an upper limit.

[Polycarbonate resin composition]

The polycarbonate resin composition according to the first embodiment of the present invention contains a carbonate structural unit (X) derived from an aromatic dihydroxy compound represented by the following formula (1), that is, 1,1-bis(4-hydroxyphenyl)-3,3,5-trimethylcyclohexane (hereinafter sometimes abbreviated as "BP-TMC") (hereinafter sometimes simply referred to as "carbonate structural unit (X)"), and a carbonate structural unit (Y) derived from an aromatic dihydroxy compound represented by the following formula (2), that is, 4,4'-dihydroxy-diphenyl (hereinafter sometimes abbreviated as "4,4'-BP") (hereinafter sometimes simply referred to as "carbonate structural unit (Y)"), and the content of carbonate structural unit (X) in 100 mol% of all carbonate structural units (Hereinafter, the content of carbonate structural units such as the carbonate structural unit (X), the carbonate structural unit (Y), and the like are all expressed as a mole percentage based on 100 mol% of total carbonate structural units in the polycarbonate resin composition.) is 31.6 mol% or more.

The polycarbonate resin composition according to the second embodiment of the present invention contains a carbonate structural unit (X) derived from an aromatic dihydroxy compound represented by the following formula (1), that is, 1,1-bis(4-hydroxyphenyl)-3,3,5-trimethylcyclohexane (BP-TMC) and a carbonate structural unit (Y) derived from an aromatic dihydroxy compound represented by the following formula (2),that is, 4,4'-dihydroxy-diphenyl (4,4'-BP), and a molar ratio (Y)/(X) of the content of the carbonate structural unit (Y) to the carbonate structural unit (X) (hereinafter simply referred to as "containing molar ratio (Y)/(X)") is 0.33 or more and 2.95 or less.

[Chem. 2]

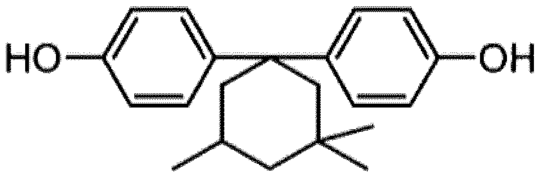

(1)

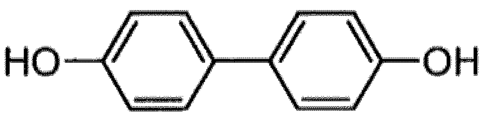

(2)

The polycarbonate resin composition of the present invention may be any composition as long as it contain the carbonate structural unit (X) and the carbonate structural unit (Y)), and the carbonate structural unit (X) and the carbonate structural unit (Y) in the above content ratio of the carbonate structural unit (X), or the above containing molar ratio (Y)/(X), and there is no particular restriction on the content form of the carbonate structural unit (X) and the carbonate structural unit (Y). Usually, the carbonate structural unit (X) and the carbonate structural unit (Y) are contained in the polycarbonate resin.

That is, the polycarbonate resin composition of the present invention may be a polycarbonate resin mixture of a polycarbonate resin containing the carbonate structural unit (X) and a polycarbonate resin containing the carbonate structural unit (Y). Alternatively, it may contain a copolymerization type polycarbonate resin that simultaneously contains the carbonate structural unit (X) and the carbonate structural unit (Y). Moreover, it may also be a mixture of a polycarbonate resin containing the carbonate structural unit (X) or the carbonate structural unit (Y), with a copolymerized polycarbonate resin containing the carbonate structural units (X) and the carbonate structural unit (Y). The polycarbonate resin composition of the present invention may further contain a polycarbonate resin that does not contain the carbonate structural units (X) and the carbonate structural units (Y).

The polycarbonate resin composition of the present invention may also contain a carbonate structural unit (Z) described below in addition to the carbonate structural unit (X) and the carbonate structural unit (Y). In this case as well, there is no particular restriction on the content form of the carbonate structural unit (Z), but the carbonate structural unit (Z) is usually contained in the polycarbonate resin. In this case, the polycarbonate resin composition of the present invention may be a polycarbonate resin mixture of a polycarbonate resin containing the carbonate structural unit (X), a polycarbonate resin containing the carbonate structural unit (Y), and a polycarbonate resin containing the carbonate structural unit (Z). Alternatively, it may contain a ternary copolymerization type polycarbonate resin that simultaneously contains the carbonate structural unit (X), the carbonate structural unit (Y) and the carbonate structural unit (Z). Moreover, it may also be a mixture of a polycarbonate resin containing one or two of the carbonate structural unit (X), the carbonate structural unit (Y) and the carbonate structural unit (Z), with a copolymerized polycarbonate resin containing the carbonate structural units (X), the carbonate structural unit (Y) and the carbonate structural unit (Z). The polycarbonate resin composition of the present invention may further contain a polycarbonate resin that does not contain the carbonate structural units (X), the carbonate structural units (Y) and the carbonate structural unit (Z).

When the polycarbonate resin composition of the present invention contains the carbonate structural units (X) and the carbonate structural unit (Y) as a copolymerized polycarbonate resin containing the carbonate structural unit (X) and the carbonate structural unit (Y), or when the polycarbonate resin composition of the present invention contains the carbonate structural units (X), the carbonate structural unit (Y) and the carbonate structural units (Z) as a tertiary copolymerized polycarbonate resin containing the carbonate structural unit (X), the carbonate structural unit (Y) and the carbonate structural unit (Z), the polycarbonate resin composition of the present invention is referred to as a "polycarbonate resin." On the other hand, when the polycarbonate resin composition of the present invention is a mixture of a polycarbonate resin containing the carbonate structural unit (X) and a polycarbonate resin containing the carbonate structural unit (Y), or when the polycarbonate resin composition of the present invention is a mixture of a polycarbonate resin containing the carbonate structural unit (X), a polycarbonate resin containing the carbonate structural unit (Y), and a polycarbonate resin containing the carbonate structural unit (Z), it is usually called a "polycarbonate resin composition". The same applies to the other forms of content mentioned above.

In the present invention, the term "polycarbonate resin composition" includes cases where the composition is composed of one type of copolymerized polycarbonate resin containing the carbonate structural unit (X) and the carbonate structural unit (Y) or the composition is composed of one type of copolymerized polycarbonate resin containing the carbonate structural unit (X), the carbonate structural unit (Y) and the carbonate structural unit (Z).

In the first embodiment, by containg the carbonate structural unit (X) and the carbonate structural unit (Y), and containg 31.6 mol% or more of the carbonate structural unit (X), the polycarbonate resin composition of the present invention can have good impact resistance, heat resistance, and fluidity.

From the viewpoint of heat resistance, the content ratio of the carbonate structural unit (X) in the polycarbonate resin composition of the present invention is preferably 31.6 mol% or more, more preferably 32.0 mol% or more, still more preferably 35.0 mol% or more, and particularly preferably 38.0 mol% or more. On the other hand, from the viewpoint of moldability and impact resistance, the content of the carbonate structural unit (X) is preferably 80.0 mol% or less, more preferably 72.0 mol% or less, and still more preferably 67.0 mol% or less.

From the viewpoint of impact resistance, the content ratio of the carbonate structural unit (Y) in the polycarbonate resin composition of the present invention is preferably 15.0 mol% or more, more preferably 23.0 mol% or more, still more preferably 29.0 mol%, and particularly preferably 31.0 mol% or more. From the viewpoint of moldability, it is preferably 52.0 mol% or less, more preferably 47.0 mol% or less, and still more preferably 43.0 mol% or less.

In the second embodiment, by containg the carbonate structural unit (X) and the carbonate structural unit (Y), and having the containing molar ratio (Y)/(X) of 0.33 or more and 2.95 or less, the polycarbonate resin composition of the present invention can have good impact resistance, heat resistance, and fluidity. The containing molar ratio (Y)/(X) is preferably 0.33 or more, more preferably 0.45 or more, and still more preferably 0.55 or more, and preferably 2.95 or less, more preferably 2 .50 or less, and still more preferably 1.80 or less.

By satisfying the carbonate structural unit (X) content of the first embodiment and the containing molar ratio (Y)/(X) of the second embodiment, the polycarbonate resin composition of the present invention becomes still more excellent in impact resistance, heat resistance, and fluidity.

The polycarbonate resin composition of the present invention may contain other carbonate structural unit

(hereinafter sometimes referred to as "carbonate structural unit (Z) ") derived from an aromatic dihydroxy compounds other than BP-TMC and 4,4'-BP (hereinafter sometimes referred to as "other aromatic dihydroxy compound") in addition to the carbonate structural unit (X) and the carbonate structural unit (Y). In this case, from the viewpoint of more effectively obtaining the effects of the present invention by including the carbonate structural unit (X) and the carbonate structural unit (Y), the content ratio of the carbonate structural unit (Z) is preferably 40 mol% or less, and particularly preferably 25 mol% or less.

<Carbonate structural unit (Z)>

Example of the carbonate structural unit (Z) that may be contained in the polycarbonate resin composition of the present invention includes a carbonate structural unit derived from an aromatic dihydroxy compound represented by the following formula (3) (hereinafter sometimes

referred to as "aromatic dihydroxy compound (3)").

[Chem. 3]

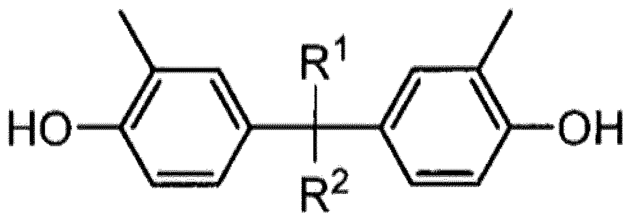

(3)

(In the formula (3), $R^1$ and $R^2$ each independently represent a hydrogen atom, a substituted or unsubstituted alkyl group having 1 to 20 carbon atoms, or a substituted or unsubstituted aryl group. Alkyl groups of $R^1$ and $R^2$ may be combined with each other to form a ring.)

In the above formula (3), $R^1$ and $R^2$ each independently represent a hydrogen atom, a substituted or unsubstituted alkyl group having 1 to 20 carbon atoms, or a substituted or unsubstituted aryl group.

Specific examples of substituted or unsubstituted alkyl groups having 1 to 20 carbon atoms for $R^1$ and $R^2$ include:

methyl group, ethyl group, n-propyl group, n-butyl group, n-pentyl group, n-hexyl group, n-heptyl group, n-octyl group, n-nonyl group, n-decyl group, n-undecyl group , n-dodecyl group, n-tridecyl group, n-tetradecyl group, n-pentadecyl group, n-hexadecyl group, n-heptadecyl group, n-octadecyl group, n-nonadecyl group, n-icosyl group;
methylethyl group, methylpropyl group, methylbutyl group, methylpentyl group, methylhexyl group, methylheptyl group, methyloctyl group, methylnonyl group, methyldecyl group, methylundecyl group, methyldodecyl group, methyltridecyl group, methyltetra Decyl group, methylpentadecyl group, methylhexadecyl group, methylheptadecyl group, methyloctadecyl group, methylnonadecyl group;
dimethylethyl group, dimethylpropyl group, dimethylbutyl group, dimethylpentyl group, dimethylhexyl group, dimethylheptyl group, dimethyloctyl group, dimethylnonyl group, dimethyldecyl group, dimethylundecyl group, dimethyldodecyl group, dimethyltridecyl group , dimethyltetradecyl group, dimethylpentadecyl group, dimethylhexadecyl group, dimethylheptadecyl group, dimethyloctadecyl group;
trimethylbutyl group, trimethylpentyl group, trimethylhexyl group, trimethylheptyl group, trimethyloctyl group, trimethylnonyl group, trimethyldecyl group, trimethylundecyl group, trimethyldodecyl group, trimethyltridecyl group, trimethyltetradecyl group, trimethylpentadecyl group, trimethylhexadecyl group, trimethylheptadecyl group;
ethylpentyl group, ethylhexyl group, ethylheptyl group, ethyloctyl group, ethylnonyl group, ethyldecyl group, ethylundecyl group, ethyldodecyl group, ethyltridecyl group, ethyltetradecyl group, ethylpentadecyl group, ethylhexadecyl group , ethylheptadecyl group, ethyloctadecyl group;
propylhexyl group, propylheptyl group, propyloctyl group, propylnonyl group, propyldecyl group, propylundecyl group, propyldodecyl group, propyltridecyl group, propyltetradecyl group, propylpentadecyl group, propylhexadecyl group, propylheptadecyl group;
butylhexyl group, butylheptyl group, butyloctyl group, butylnonyl group, butyldecyl group, butylundecyl group, butyldodecyl group, butyltridecyl group, butyltetradecyl group, butylpentadecyl group, butylhexadecyl group, and the like.

$R^1$ and $R^2$, which are substituted or unsubstituted alkyl groups having 1 to 20 carbon atoms, in the formula (3) may be bonded to each other to form a ring. Specific examples of aromatic dihydroxy compounds in which $R^1$ and $R^2$ are bonded to each other to form a ring include those represented by the following formulas (3B) and (3C).

[Chem. 4]

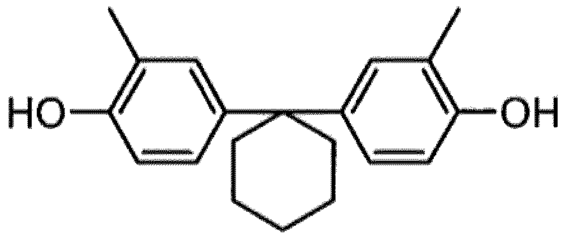

(3B)

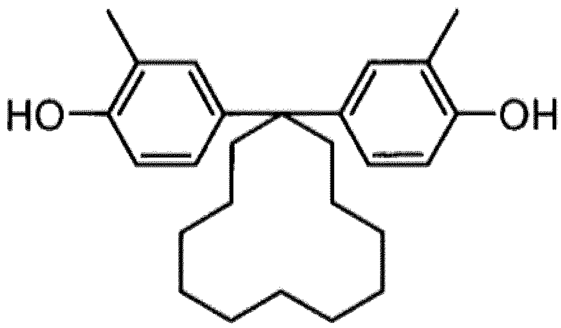

(3C)

Specific examples of substituted or unsubstituted aryl groups for $R^1$ and $R^2$ include phenyl group, tolyl group, 4-methylphenyl group, naphthyl group, and the like.

Among these, $R^1$ and $R^2$ are preferably a hydrogen atom, a methyl group, an ethyl group, or a cyclohexylidene group formed by bonding $R^1$ and $R^2$ to each other.

As the aromatic dihydroxy compound (3), aromatic dihydroxy compounds represented by the following formulas (3A) and (3B) are more preferable from the viewpoint of mechanical properties and moldability.

[Chem. 5]

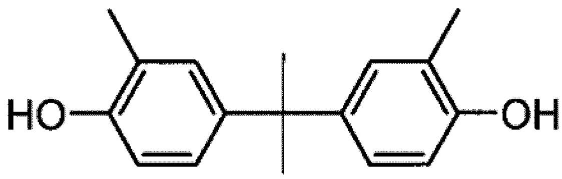

(3A)

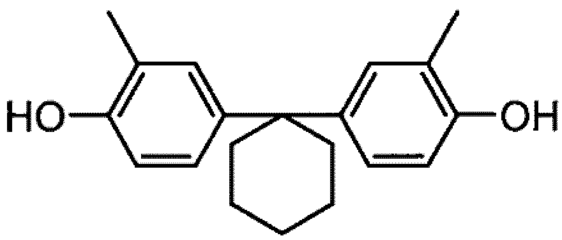

(3B)

Examples of the carbonate structural unit (Z) that may be contained in the polycarbonate resin composition of the present invention include an aromatic dihydroxy compound represented by the following formula (4) (hereinafter sometimes referred to as "aromatic dihydroxy compound (4)").

[Chem. 6]

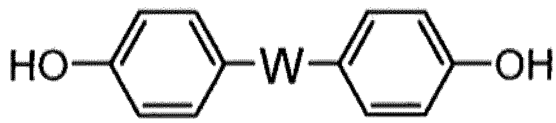

(4)

(In the formula (4), W represents -O-, -S-, $-SO_2-$, or $-CR^3R^4-$(Wherein $R^3$ and $R^4$ each independently represent a hydrogen atom, a substituted or unsubstituted alkyl group having 1 to 20 carbon atoms, or a substituted or unsubstituted aryl group. $R^3$ and $R^4$ may be bonded to each other to form a ring. However, this excludes these in which $R^3$ and $R^4$ are bonded to form a 3,3,5- trimethylcyclohexylidene group.))

In the formula (4), W represents -O-, -S-, $-SO_2-$, on - $CR^3R^4$-. ($R^3$ and $R^4$ each independently represent a hydrogen atom, a substituted or an unsubstituted alkyl group having 1 to 20 carbon atoms, or a substituted or unsubstituted aryl group. $R^3$ and $R^4$ may be bonded to each other to form a ring. However, this excludes these in which $R^3$ and $R^4$ are bonded to form a 3,3,5- trimethylcyclohexylidene group.))

Specific examples of substituted or unsubstituted alkyl groups having 1 to 20 carbon atoms for $R^3$ and $R^4$ include:

methyl group, ethyl group, n-propyl group, n-butyl group, n-pentyl group, n-hexyl group, n-heptyl group, n-octyl group, n-nonyl group, n-decyl group, n-undecyl group , n-dodecyl group, n-tridecyl group, n-tetradecyl group, n-pentadecyl group, n-hexadecyl group, n-heptadecyl group, n-octadecyl group, n-nonadecyl group, n-icosyl group;
methylethyl group, methylpropyl group, methylbutyl group, methylpentyl group, methylhexyl group, methylheptyl group, methyloctyl group, methylnonyl group, methyldecyl group, methylundecyl group, methyldodecyl group, methyltridecyl group, methyltetra Decyl group, methylpentadecyl group, methylhexadecyl group, methylheptadecyl group, methyloctadecyl group, methylnonadecyl group;
dimethylethyl group, dimethylpropyl group, dimethylbutyl group, dimethylpentyl group, dimethylhexyl group, dimethylheptyl group, dimethyloctyl group, dimethylnonyl group, dimethyldecyl group, dimethylundecyl group, dimethyldodecyl group, dimethyltridecyl group , dimethyltetradecyl group, dimethylpentadecyl group, dimethylhexadecyl group, dimethylheptadecyl group, dimethyloctadecyl group;
trimethylbutyl group, trimethylpentyl group, trimethylhexyl group, trimethylheptyl group, trimethyloctyl group, trimethylnonyl group, trimethyldecyl group, trimethylundecyl group, trimethyldodecyl group, trimethyltridecyl group, trimethyltetradecyl group, trimethylpenta decyl group, trimethylhexadecyl group, trimethylheptadecyl group;
ethylpentyl group, ethylhexyl group, ethylheptyl group, ethyloctyl group, ethylnonyl group, ethyldecyl group, ethylundecyl group, ethyldodecyl group, ethyltridecyl group, ethyltetradecyl group, ethylpentadecyl group, ethylhexadecyl group , ethylheptadecyl group, ethyloctadecyl group;
propylhexyl group, propylheptyl group, propyloctyl group, propylnonyl group, propyldecyl group, propylundecyl group, propyldodecyl group, propyltridecyl group, propyltetradecyl group, propylpentadecyl group, propylhexadecyl group, propylheptadecyl group;
butylhexyl group, butylheptyl group, butyloctyl group, butylnonyl group, butyldecyl group, butylundecyl group, butyldodecyl group, butyltridecyl group, butyltetradecyl group, butylpentadecyl group, butylhexadecyl group, and the like.

$R^3$ and $R^4$, which are substituted or unsubstituted alkyl groups having 1 to 20 carbon atoms, in the formula (3) may be bonded to each other to form a ring. Specific examples of aromatic dihydroxy compounds in which $R^3$ and $R^4$ are bonded to each other to form a ring include those represented by the following formulas (4A) and (4B).

[Chem. 7]

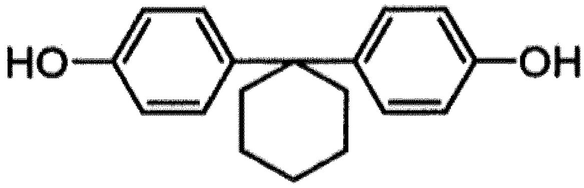

(4A)

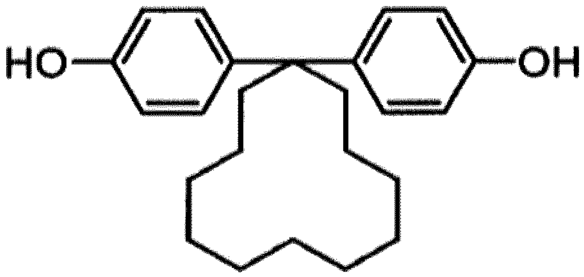

(4B)

Specific examples of substituted or unsubstituted aryl groups for $R^3$ and $R^4$ include phenyl group, tolyl group, 4-methylphenyl group, naphthyl group, and the like.

As the aromatic dihydroxy compound (4), aromatic dihydroxy compounds represented by the following formulas (4C) and (4D) are preferable from the viewpoint of heat resistance, mechanical properties, and moldability.

[Chem. 8]

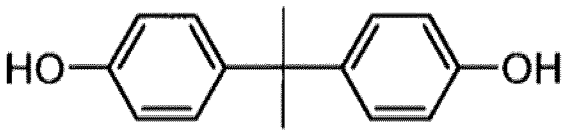

(4C)

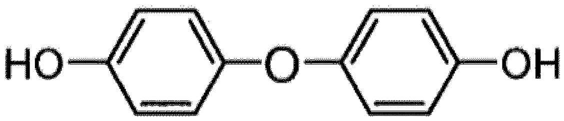

(4D)

When the polycarbonate resin composition of the present invention contains the above carbonate structural unit (Z), it may contain only one type of carbonate structural unit (Z), or it may contain two or more types. That is, it may contain carbonate structural units (Z) derived from two or more types of aromatic dihydroxy compounds (3) and/or aromatic dihydroxy compounds (4).

<Other carbonate structural units>

The polycarbonate resin composition of the present invention may contain carbonate structural units other than carbonate structural units (X), (Y), and (Z), i.e., may contain a carbonate structural unit derived from an aromatic or aliphatic dihydroxy compound other than BP-TMC, 4,4'-BP and aromatic dihydroxy compounds (3) and (4).

Dihydroxy compounds other than BP-TMC, 4,4'-BP, and aromatic dihydroxy compounds (3) and (4) may be used alone or in combination of two or more in any combination and ratio. good.

<Content of each carbonate structural unit (X), (Y), (Z)>

The content of each carbonate structural unit (X), (Y), and (Z) in the polycarbonate resin composition of the present invention can be determined as the ratio of each aromatic dihydroxy compounds ie, BP-TMC, 4,4'-BP, an aromatic dihydroxy compound (3), and an aromatic dihydroxy compound (4) in all dihydroxy compounds used in the production of

the polycarbonate resin composition of the present invention.

<Molecular weight of polycarbonate resin composition>

The molecular weight of the polycarbonate resin composition of the present invention is preferably 13,000 to 33,000 in terms of a viscosity-average molecular weight (Mv) calculated from the solution viscosity. It is preferable that the viscosity-average molecular weight (Mv) is equal to or higher than the above lower limit because the mechanical properties of the polycarbonate resin composition of the present invention will be good. It is preferable that the viscosity-average molecular weight is equal to or lower than the above upper limit because the fluidity of the polycarbonate resin composition of the present invention tends to be good. From such a viewpoint, the viscosity-average molecular weight (Mv) of the polycarbonate resin composition of the present invention is more preferably 14,000 or more. Further, it is more preferably 31,500 or less, and still more preferably 30,000 or less.

The viscosity-average molecular weight (Mv) of the polycarbonate resin composition of the present invention refers to a value determined by measuring intrinsic viscosity (limiting viscosity) [η] (unit: dL/g) at a temperature of 20°C with an Ubbelohde viscometer using methylene chloride as a solvent and calculated using Schnell viscosity equation $\eta = 1.23 \times 10^{-4} Mv^{0.83}$. The intrinsic viscosity (limiting viscosity) [η] refers to a value determined by measuring specific viscosities [ηsp] at different solution concentrations [C] (g/dL) and calculated using the following formula.

[Math. 1]

$$\eta = \lim_{c \to 0} \eta_{sp}/c$$

<Glass transition temperature of polycarbonate resin composition>

There is no particular restriction on the glass transition temperature of the polycarbonate resin composition of the present invention, but the glass transition temperature of the polycarbonate resin composition of the present invention, determined in accordance with ISO 3146 by measuring the amount of heat by heating at heating rate of 20°C/min using a differential scanning calorimeter, is preferably 185°C or higher, and more preferably 190°C or higher. It is preferable that the glass transition temperature is equal to or higher than the above lower limit, because it has excellent heat resistance. The upper limit of the glass transition temperature of the polycarbonate resin composition of the present invention is usually 230°C or lower, and preferably 215°C or lower from the viewpoint of moldability.

<Fluidity (Q value) of polycarbonate resin composition>

The polycarbonate resin composition of the present invention preferably has a value indicating fluidity (Q value), which is an index of moldability, measured in accordance with JIS K7210-1 Annex JA at 320°C and 160 kgf, of 2.0 (unit: $10^{-2}$ $cm^3$/sec) or more, more preferably 4.0 or more, and still more preferably 6.0 or more. When the Q value is greater than or equal to the above lower limit, fluidity and moldability will be excellent.

<Izod impact strength of polycarbonate resin composition>

Although there are no particular limitations, the polycarbonate resin composition of the present invention usually has such high impact resistance that the notched Izod value measured by a method accordance with ASTM D256 is preferably 60 J/m or more. This value is more preferably 85 J/m or more.

The Izod impact test of the polycarbonate resin composition is measured using the method described in the Examples section below on a test piece of the polycarbonate resin composition having a thickness of 3.2 mm, a length of 53.5 mm, and a width of 12.7 mm.

<Other ingredients>

The polycarbonate resin composition of the present invention may contain other components in addition to the polycarbonate resin containing the carbonate structural unit (X) and/or the carbonate structural unit (Y) as long as desired physical properties are not significantly impaired. Examples of other components include polycarbonate resins that do not

contain carbonate structural units (X) and carbonate structural units (Y), resins other than polycarbonate resins, and various resin additive agents.

The same can be said even when the polycarbonate resin composition of the present invention contains a carbonate structural unit (Z) in addition to the carbonate structural unit (X) and the carbonate structural unit (Y). The polycarbonate resin composition of the present invention may contain other components in addition to the polycarbonate resin containing the carbonate structural unit (X) and/or the carbonate structural unit (Y) and/or the carbonate structural unit (Z) as long as desired physical properties are not significantly impaired. Examples of other components include polycarbonate resins that do not contain carbonate structural units (X), carbonate structural units (Y), and carbonate structural units (Z), resins other than polycarbonate resins, and various resin additive agents.

Examples of resin additive agents include a heat stabilizer, an antioxidant, a release agent, a light stabilizer (HALS), a flame retardant, an antistatic agent, an anti-fogging agent, a lubricant, an anti-blocking agent, a flow modifier, a plasticizer, a dispersant, an antimicrobial agent, a dye, a pigment, or the like.

The resin additive agents may be used alone or combined in any ratio.

Examples of the other resins include, for example, thermoplastic polyester resins such as polyethylene terephthalate resin, polytrimethylene terephthalate resin, and polybutylene terephthalate resin, and the like; styrenic resins such as polystyrene resin, high impact polystyrene resin (HIPS), acrylonitrile-styrene copolymer (AS resin), acrylonitrile-styrene-acrylic rubber copolymer (ASA resin), acrylonitrile-ethylenepropylene rubber-styrene copolymer (AES resin), and the like; polyolefin resins such as polyethylene resin, polypropylene resin, and the like; polyamide resin; polyimide resin; polyetherimide resin; polyurethane resin; polyphenylene ether resin; polyphenylene sulfide resin; polysulfone resin; polymethacrylate resin, and the like.

One type of the other resin may be contained, or two or more types may be contained in any combination and ratio.

[Method for producing polycarbonate resin composition]

The polycarbonate resin constituting the polycarbonate resin composition of the present invention can be produced by a conventionally known polymerization method, and the polymerization method is not particularly limited. Examples of the polymerization method include an interfacial polymerization method, a melt transesterification method, a pyridine method, a ring-opening polymerization method of a cyclic carbonate compound, and a solid-phase transesterification method of a prepolymer. Particularly suitable methods among these methods are more specifically described below.

<Interfacial polymerization method>

In the interfacial polymerization method, a raw material dihydroxy compound and a carbonate-forming compound are allowed to react in the presence of an inert organic solvent and an alkaline aqueous solution typically at a pH of 9 or more, and subsequent interfacial polymerization in the presence of a polymerization catalyst yields a polycarbonate resin. When necessary, the reaction system may include a molecular weight modifier (terminating agent) and an antioxidant for preventing the oxidation of the raw material dihydroxy compound.

Examples of the inert organic solvent include, but are not limited to, chlorinated hydrocarbons, such as dichloromethane, 1,2-dichloroethane, chloroform, monochlorobenzene, and dichlorobenzene; and aromatic hydrocarbons, such as benzene, toluene, and xylene. The organic solvents may be used alone or combined in any ratio.

The alkaline aqueous solution may contain any alkaline compound, for example, an alkali or alkaline-earth metal compound, such as sodium hydroxide, potassium hydroxide, lithium hydroxide, or sodium hydrogen carbonate. Among these, sodium hydroxide and potassium hydroxide are preferred. The alkaline compounds may be used alone or combined in any ratio.

The concentration of an alkaline compound in the alkaline aqueous solution is typically, but not limited to, in the range of 5% to 10% by mass to control the pH of the alkaline aqueous solution in the range of 10 to 12.

In the case of blowing with phosgene, to control the pH of an aqueous phase in the range of 10 to 12, preferably 10 to 11, it is preferable that the mole ratio of the raw material dihydroxy compound to the alkaline compound is typically 1:1.9 or more, particularly 1:2.0 or more, and typically 1:3.2 or less, particularly 1:2.5 or less.

By using a dihydroxy compound containing BP-TMC and 4,4'-BP as a raw material dihydroxy compound, a copolymerized polycarbonate resin containing the carbonate structural unit (X) and the carbonate structural unit (Y) can be produced. By using one of these aromatic dihydroxy compounds, a polycarbonate resin containing the carbonate structural unit (X) or the carbonate structural unit (Y) can be produced. Similarly, for the carbonate structural unit (Z), a polycarbonate resin containing the carbonate structural unit (Z) can be produced by using the aromatic dihydroxy compound (3) and/or the aromatic dihydroxy compound (4) as the raw material dihydroxy compound.

The carbonate-forming compound is suitably a carbonyl halide. Phosgene is particularly preferred. The method

using phosgene is particularly referred to as a phosgene method.

Examples of the polymerization catalyst include, but are not limited to, aliphatic tertiary amines, such as trimethylamine, triethylamine, tributylamine, tripropylamine, and trihexylamine; alicyclic tertiary amines, such as N,N'-dimethylcyclohexylamine and N,N'-diethylcyclohexylamine; aromatic tertiary amines, such as N,N'-dimethylaniline and N,N'-diethylaniline; quaternary ammonium salts, such as trimethylbenzylammonium chloride, tetramethylammonium chloride, and triethylbenzylammonium chloride; pyridines; guanines; and guanidine salts. The polymerization catalysts may be used alone or combined in any ratio.

Examples of the molecular weight modifier include, but are not limited to, aromatic phenols with a monohydric phenolic hydroxy group; aliphatic alcohols, such as methanol and butanol; mercaptans; and phthalimides. Among these, aromatic phenols are preferred.

Specific examples of the aromatic phenol include phenol, o-n-butylphenol, m-n-butylphenol, p-n-butylphenol, o-isobutylphenol, m-isobutylphenol, p-isobutylphenol, o-t-butylphenol, m-t-butylphenol, p-t-butylphenol, o-n-pentylphenol, m-n-pentylphenol, p-n-pentylphenol, o-n-hexylphenol, m-n-hexylphenol, p-n-hexylphenol, p-t-octylphenol, o-cyclohexylphenol, m-cyclohexylphenol, p-cyclohexylphenol, o-phenylphenol, m-phenylphenol, p-phenylphenol, o-n-nonylphenol, m-n-nonylphenol, p-n-nonylphenol, o-cumylphenol, m-cumylphenol, p-cumylphenol, o-naphthylphenol, m-naphthylphenol, p-naphthylphenol, 2,5-di-t-butylphenol, 2,4-di-t-butylphenol, 3,5-di-t-butylphenol, 2,5-dicumylphenol, 3,5-dicumylphenol, p-cresol, bromophenol, tribromophenol, monoalkylphenols with a linear or branched alkyl group having 12 to 35 carbon atoms on average in the ortho, meta, or para position, 9-(4-hydroxyphenyl)-9-(4-methoxyphenyl)fluorene, 9-(4-hydroxy-3-methylphenyl)-9-(4-methoxy-3-methylphenyl)fluorene, and 4-(1-adamantyl)phenol. Among these, p-t-butylphenol, p-phenylphenol, and p-cumylphenol are preferably used.

The molecular weight modifiers may be used alone or combined in any ratio.

The amount of molecular weight modifier to be used is typically, but not limited to, 0.5 mol or more, preferably 1 mol or more, and typically 50 mol or less, preferably 30 mol or less, per 100 mol of the raw material dihydroxy compound.

The antioxidant may be, but is not limited to, a hindered phenolic antioxidant. Specific examples include pentaerythritoltetrakis[3-(3,5-di-tert-butyl-4-hydroxyphenyl)propionate], octadecyl-3-(3,5-di-tert-butyl-4-hydroxyphenyl) propionate, thiodiethylenebis[3-(3,5-di-tert-butyl-4-hydroxyphenyl)propionate], N,N'-hexane-1,6-diylbis[3-(3,5-di-tert-butyl-4-hydroxyphenyl)propionamide], 2,4-dimethyl-6-(1-methylpentadecyl)phenol, diethyl[[3,5-bis(1,1-dimethylethyl)-4-hydroxyphenyl]methyl]phosphate, 3,3',3",5,5',5"-hexa-tert-butyl-a,a',a"-(mesitylene-2,4,6-triyl)tri-p-cresol, 4,6-bis(octylthiomethyl)-o-cresol, ethylenebis(oxyethylene)bis[3-(5-tert-butyl-4-hydroxy-m-tolyl)propionate], hexamethylenebis[3-(3,5-di-tert-butyl-4-hydroxyphenyl)propionate], 1,3,5-tris(3,5-di-tert-butyl-4-hydroxybenzyl)-1,3,5-triazine-2,4,6(1H,3H,5H)-trione, 2,6-di-tert-butyl-4-(4,6-bis(octylthio)-1,3,5-triazine-2-ylamino)phenol, and 2-[1-(2-hydroxy-3,5-di-tert-pentylphenyl)ethyl]-4,6-di-tert-pentylphenyl acrylate.

Among these, pentaerythritoltetrakis[3-(3,5-di-tert-butyl-4-hydroxyphenyl)propionate] and octadecyl-3-(3,5-di-tert-butyl-4-hydroxyphenyl)propionate are preferred. Commercial products of such phenolic antioxidants include "Irganox 1010" and "Irganox 1076" manufactured by BASF and "ADK STAB AO-50" and "ADK STAB AO-60" manufactured by Adeka Corp.

The antioxidants may be used alone or combined in any ratio.

The amount of antioxidant to be used is not particularly limited, but for example, it is usually 0.001 parts by mass or more, preferably 0.01 parts by mass or more, and more preferably 0.1 parts by mass or more, per 100 parts by mass of the raw material dihydroxy compound. The amount is usually 1 part by mass or less, and preferably 0.5 part by mass or less. When the amount of antioxidant to be used is less than the lower limit of the above range, the effect as an antioxidant may be insufficient, and when the amount of antioxidant to be used exceeds the upper limit of the above range, gas may easily be generated during injection molding.

In the reaction, a reaction substrate (reaction raw material), a reaction solvent (organic solvent), a catalyst, and an additive agent are mixed in any order, provided that a desired polycarbonate resin can be produced. Thus, the order may be appropriately determined. For example, when phosgene is used as a carbonate-forming compound, the molecular weight modifier may be added at any point between the reaction (phosgenation) of the raw material dihydroxy compound with phosgene and the beginning of the polymerization reaction.

The reaction temperature is usually, but not limited to, in the range of 0°C to 40°C. The reaction time is usually, but not limited to, in the range of several minutes (for Example 10 minutes) to several hours (for example 6 hours).

<Melt transesterification method>

The melt transesterification method involves transesterification between a carbonate ester and the raw material dihydroxy compound, for example.

The raw material dihydroxy compound is the same as that in the interfacial polymerization method.

Examples of the carbonate ester include compounds represented by the following formula (5), such as aryl carbonates, dialkyl carbonates, biscarbonates of dihydroxy compounds, monocarbonates of dihydroxy compounds, and

carbonates of dihydroxy compounds, such as cyclic carbonates.

[Chem. 9]

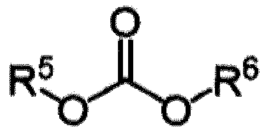

(5)

In the above formula (5), $R^5$ and $R^6$ independently denote an alkyl group having 1 to 30 carbon atoms, an aryl group, or an arylalkyl group. When $R^5$ and $R^6$ independently denote an alkyl group or an arylalkyl group, the compound is hereinafter sometimes referred to as a dialkyl carbonate, and when $R^5$ and $R^6$ independently denote an aryl group, the compound is hereinafter sometimes referred to as a diaryl carbonate. In terms of reactivity with the dihydroxy compound, both $R^5$ and $R^6$ preferably independently denote an aryl group, more preferably a diaryl carbonate represented by the following formula (6).

[Chem. 10]

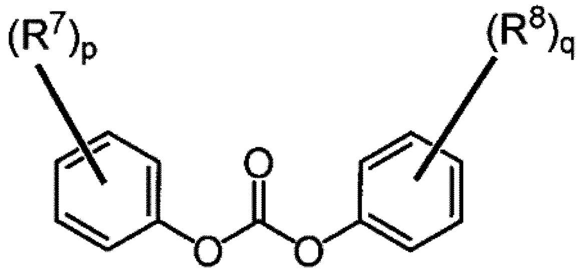

(6)

In the above formula (6), $R^7$ and $R^8$ independently denote a halogen atom, a nitro group, a cyano group, an alkyl group having 1 to 20 carbon atoms, an alkoxycarbonyl group having 1 to 20 carbon atoms, a cycloalkyl group having 4 to 20 carbon atoms, or an aryl group having 6 to 20 carbon atoms, p and q independently denote an integer in the range of 0 to 5.
Specific examples of the carbonate ester include dialkyl carbonates, such as dimethyl carbonate, diethyl carbonate, and di-t-butyl carbonate, and (optionally substituted) diaryl carbonate, such as diphenyl carbonate (hereinafter sometimes abbreviated to "DPC"), bis(4-methylphenyl)carbonate, bis(4-chlorophenyl)carbonate, bis(4-fluorophenyl) carbonate, bis(2-chlorophenyl)carbonate, bis(2,4-difluorophenyl)carbonate, bis(4-nitrophenyl)carbonate, bis(2-nitrophenyl)carbonate, bis(methylsalicylphenyl)carbonate, and ditolyl carbonate. Among these, diphenyl carbonate is preferred.
These carbonate esters may be used alone or in combination.
Preferably 50% or less by mole, more preferably 30% or less by mole, of the carbonate ester may be substituted with dicarboxylic acid or dicarboxylate. Typical examples of the dicarboxylic acid or dicarboxylate include terephthalic acid, isophthalic acid, diphenyl terephthalate, and diphenyl isophthalate. Substitution with such a dicarboxylic acid or dicarboxylate yields a polyester carbonate.
The ratio of the raw material dihydroxy compound to the carbonate ester may be any ratio that can result in a desired polycarbonate resin. The carbonate ester is preferably used in excess with respect to the raw material dihydroxy compound in polymerization with the dihydroxy compound. That is, the carbonate ester is preferably used in an amount of 1.01 to 1.30 times (molar ratio), more preferably 1.02 to 1.20 times (molar ratio), relative to the dihydroxy compound. When this molar ratio is too small, the resulting polycarbonate resin will have a large number of terminal OH groups, and the thermal stability of the resin will tend to deteriorate. When this molar ratio is too large, the reaction rate of transesterification will decrease, making it difficult to produce the polycarbonate resin having the desired molecular weight, or increasing the amount of carbonate ester remaining in the resin, which may cause odor during molding or in molded product.
A transesterification catalyst is typically used to produce a polycarbonate resin by the melt transesterification method. The transesterification catalyst is not limited, and may be a known transesterification catalyst. For example, an alkali metal compound and/or an alkaline-earth metal compound is preferably used. In an auxiliary manner, a basic compound such as a basic boron compound, a basic phosphorus compound, a basic ammonium compound, an amine compound or the like may be used together.
The transesterification catalysts may be used alone or combined in any ratio.

In the melt transesterification method, the reaction temperature is typically, but not limited to, in the range of 100°C to 320°C. The reaction pressure is typically, but not limited to, a reduced pressure of 2 mmHg or less. In specific procedures, a melt polycondensation reaction may be performed under the conditions described above while removing by-products.

The polycarbonate resin composition of the present invention is significantly affected by thermal history and oxidation in the presence of an alkaline catalyst whereby having poor hue. It is therefore preferred to set the reaction temperature at 320°C or less and select a reduced-pressure condition with a lower limit of approximately 0.05 mmHg to prevent oxygen from leaking into an apparatus due to an excessively reduced pressure.

The reaction may be performed batch-wise or continuously. In a batch-wise reaction, a reaction substrate, a reaction solvent, a catalyst, and an additive agent are mixed in any order provided that a desired polycarbonate resin can be produced. Thus, the order may be appropriately determined.

When necessary, the melt transesterification method may use a catalyst deactivator. The catalyst deactivator may be any compound that can neutralize the transesterification catalyst. Examples of the catalyst deactivator include sulfur-containing acidic compounds and derivatives thereof and phosphorus-containing acidic compounds and derivatives thereof.

The catalyst deactivators may be used alone or in combination in any ratio.

The amount of catalyst deactivator to be used is typically, but not limited to, 0.5 equivalent or more, preferably 1 equivalent or more, more preferably 3 equivalent or more, and typically 50 equivalent or less, preferably 10 equivalent or less, more preferably 8 equivalent or less, of the transesterification catalyst. The amount of catalyst deactivator to be used is typically 1 ppm or more and 100 ppm or less, preferably 50 ppm or less, of the polycarbonate resin.

[Method for producing polycarbonate resin composition]

There is no particular limitation on the method of producing the polycarbonate resin composition of the present invention. Examples thereof include methods 1) to 4) below:

1) A method of melt-kneading the polycarbonate resin (a) and the polycarbonate resin (b);
2) A method of melt-kneading the molten polycarbonate resin (a) and the molten polycarbonate resin (b);
3) A method of mixing the polycarbonate resin (a) and the polycarbonate resin (b) in a solution state; and
4) A method of dry blending the polycarbonate resin (a) and the polycarbonate resin (b).

Each method will be explained below.

1) A method of melt-kneading the polycarbonate resin (a) and the polycarbonate resin (b)

Pellets or granules of the polycarbonate resin (a) and pellets or granules of the polycarbonate resin (b) are melt-kneaded using a mixing device such as a kneader, a twin-screw extruder, a single-screw extruder, and the like. The pellets or powder of the polycarbonate resin (a) and the pellets or powder of the polycarbonate resin (b) may be mixed in advance in a solid state and then kneaded. Any one may be melted in the mixing device first, and the remaining polycarbonate resin may be added thereto and kneaded.

Although there is no particular restriction on the kneading temperature, it is preferably 240°C or higher, more preferably 260°C or higher, and still more preferably 280°C or higher. Further, the temperature is preferably 380°C or lower, and particularly preferably 350°C or lower.

When the kneading temperature is too low, the polycarbonate resin (a) and the polycarbonate resin (b) will not be completely mixed, which is not preferable because it may cause variations in hardness and impact resistance when molded products are produced. When the kneading temperature is too high, the color tone of the polycarbonate resin composition may deteriorate, which is not preferable.

2) A method of melt-kneading the molten polycarbonate resin (a) and the molten polycarbonate resin (b)

The molten polycarbonate resin (a) and the molten polycarbonate resin (b) are mixed in a mixing device such as a stirring tank, a static mixer, a kneader, a twin-screw extruder, a single-screw extruder, and the like. When the polycarbonate resin is obtained by a melt polymerization method, it may be introduced into the mixing device in a molten state without being cooled or solidified.

3) A method of mixing the polycarbonate resin (a) and the polycarbonate resin (b) in a solution state

In this method, the polycarbonate resin (a) and the polycarbonate resin (b) are dissolved in a suitable solvent to

form a solution, mixed in a solution state, and then isolated as a polycarbonate resin composition. Suitable solvents include, for example, aliphatic hydrocarbons such as hexane, n-heptane, and the like; chlorinated aliphatic carbons such as dichloromethane, chloroform, carbon tetrachloride, dichloroethane, trichloroethane, tetrachloroethane, dichloropropane, 1,2-dichloroethylene, and the like; aromatic hydrocarbons such as benzene, toluene, xylene, and the like; and substituted aromatic hydrocarbons such as nitrobenzene, acetophenone, and the like. Among these, chlorinated hydrocarbons such as dichloromethane or chlorobenzene are preferably used. These solvents can be used alone or in mixtures with other solvents.

Examples of the mixing device include a stirring tank and a static mixer. The mixing temperature is not particularly limited as long as the polycarbonate resin (a) and the polycarbonate resin (b) are dissolved, but the mixing temperature is usually equal to below the boiling point of the solvent used.

4) A method of dry blending the polycarbonate resin (a) and the polycarbonate resin (b)

In this method, pellets or granules of the polycarbonate resin (a) and pellets or granules of the polycarbonate resin (b) are dry-blended using a tumbler, a super mixer, Henschel mixer, Nauta mixer, and the like.

Among the methods 1) to 4) above, the methods 1) and 2) in which the polycarbonate resin (a) and the polycarbonate resin (b) are melt-kneaded are preferred; and the method 4) in which the polycarbonate resin (a) and the polycarbonate resin (b) are dry-blended is also preferred.

In any of the above methods for producing the composition, a pigment, a dye, a release agent, a heat stabilizer, and the like may be added as appropriate within the range that does not impair the purpose of the present invention.

[Method for producing molded product]

A known extrusion molding device or injection molding device is used to produce a resin molded product from the polycarbonate resin composition of the present invention.

The molding temperature when molding the polycarbonate resin composition of the present invention is preferably 250°C or higher, more preferably 280°C or higher, and most preferably 320°C or higher. Further, the temperature is preferably 400°C or lower, and particularly preferably 380°C or lower. When the molding temperature is too low, the melt viscosity may increase, fluidity may decrease, and moldability may decrease. When the molding temperature is too high, the polycarbonate resin composition will be colored, and the color tone of the resulting molded product may also deteriorate, which is not preferable.

When performing injection molding or extrusion molding, a pigment, a dye, a release agent, a heat stabilizer, and the like can be appropriately added to the polycarbonate resin composition of the present invention within a range that does not impair the purpose of the present invention.

<Injection molded product>

A known injection molding device can be used to produce an injection molded product from the polycarbonate resin composition of the present invention.

The mold temperature when using an injection molding device or the like is preferably 150°C or lower, and more preferably 130°C or lower. Further, the temperature is preferably 30°C or higher, and particularly preferably 50°C or higher. When the mold temperature is too high, it is necessary to increase the cooling time during molding, which may lengthen the producing cycle of the molded product and reduce productivity. When the mold temperature is too low, the melt viscosity of the polycarbonate resin composition will become too high, and it may be impossible to obtain a uniform molded product, causing problems such as unevenness on the surface of the molded product, which is not preferable.

<Extrusion molded product>

A known extrusion molding device can be used to produce an extrusion molded product from the polycarbonate resin composition of the present invention. The extrusion molding device is generally equipped with a T die, a round die, and the like, and can produce extrusion molded products of various shapes. Examples of extruded product include a sheet, a film, a plate, a tube, a pipe, and the like. Among these, a sheet or a film is preferred.

The extrusion molded product of the polycarbonate resin composition of the present invention may be laminated with a hard coat layer on both sides or one side of the extrusion molded product to improve adhesion, paintability, and printability. The extrusion molded product may be heat-laminated with a weather resistance and/or a scratch resistance improving film to both sides or one side of the extruded product. Furthermore, the surface may be subjected to treatments such as graining, translucency, opacity and the like.

Molded articles of the polycarbonate resin composition of the present invention can be used in buildings,

vehicles, electrical and electronic devices, machinery, and various other fields.

## Example

The present invention is more specifically described in the following Examples. The present invention is not limited to these Examples.

The physical properties of polycarbonate resins produced in the following Examples and Comparative Examples were evaluated by the following methods.

(1) Viscosity-average molecular weight (Mv)

An intrinsic viscosity (limiting viscosity) [η] (unit: dL/g) of a polycarbonate resin dissolved in methylene chloride (concentration: 6.0 g/L) was measured with an Ubbelohde viscometer (manufactured by Moritomo Rika Kogyo) at 20°C, and the viscosity-average molecular weight (Mv) was calculated using the Schnell viscosity equation (the following equation).

$$\eta = 1.23 \times 10^{-4} Mv^{0.83}$$

(2) Glass transition temperature (Tg)

An amount of heat of approximately 10 mg of a polycarbonate resin sample was measured with a differential scanning calorimeter (DSC 6220 manufactured by SII) while heating the sample at a heating rate of 20°C/min, and an extrapolated glass transition starting temperature was determined in accordance with ISO 3146. The extrapolated glass transition starting temperature is the temperature at a point of intersection between an extended line of the baseline from the low temperature side to the high temperature side and a tangent line drawn at a point of the maximum gradient of a curve of a stepwise change portion of glass transition. The extrapolated glass transition temperature was defined as the glass transition temperature (Tg).

When the measured glass transition temperature (Tg) was 190°C or higher, it was rated "A", when it was 185°C or more and lower than 190°C, it was rated "B", and when it was lower than 185°C, it was rated "C". When it was A or B, it was judged that the heat resistance was high.

(3) Izod impact strength

A test piece of a polycarbonate resin sample having a thickness of 3.2 mm, a length of 53.5 mm, and a width of 12.7 mm was produced using a small injection molding machine (Shinko Sellbic Co., Ltd. C, Mobile) under the conditions of the cylinder temperature and the mold temperature described in each of Examples and Comparative Examples. A notch was cut on the test piece in accordance with ASTM D256 at a vertical position of 31.8 mm from the edge. The notch had a notch tip radius of 0.25 mm, and a notch depth of 2.54 mm. A value of the notched Izod of the test piece was measured five times using a universal impact tester (Toyo Seiki Seisaku-sho, Ltd.), and the average value was calculated.

When the measured notched Izod impact strength value was 85 J/m or more, it was rated "A", when it was 60 J/m or more and less than 85 J/m, it was rated "B", and when it was less than 60 J/m, it was rated "C". When it was A or B, it was judged that the impact resistance was high.

(4) Q value

As an evaluation of fluidity, the flow value (Q value) of the pellets was evaluated by the method described in JIS K7210-1 Appendix JA. The measurement was carried out using a CFT-500EX flow tester manufactured by Shimadzu Corporation, using a die having a hole diameter of 1.0 mmφ and a length of 10 mm. And the amount of molten resin(unit: $10^{-2}$ $cm^3$/sec) discharged under the conditions of a test temperature of 320°C, a test force of 160 kg/$cm^2$, and a preheating time of 180 seconds
was measured. The Q value is an index of melt viscosity, and equivalent values indicate equivalent moldability.

When the measured flow value (Q value) is 4.0 or more, it was rated "A", when it was 2.0 or more and less than 4.0, it was rated "B", and when it was less than 2.0, it was rated "C". When it was A or B, it was judged that the fluidity was high.

Hereinafter, the compounds used in Examples and Comparative Examples are abbreviated as follows. The compounds were from the following manufacturers.

<Aromatic dihydroxy compound>

BP-TMC: 1,1-bis(4-hydroxyphenyl)-3,3,5-trimethylcyclohexane (manufactured by Honshu Chemical Co., Ltd.)
4,4'-BP: 4,4'-dihydroxy-diphenyl (manufactured by MELOG SPECIALITY CHEMICALS PVT. LTD.)
BPA: 2,2'-bis(4-hydroxyphenyl)propane (bisphenol A) (manufactured by Mitsubishi Chemical Corporation)

<Carbonate ester>

DPC: diphenyl carbonate (manufactured by Mitsubishi Chemical Corporation)

<Polycarbonate resin>

A-PC: Bisphenol A polycarbonate resin (manufactured by Mitsubishi Engineering-Plastics Corporation, trade name Novarex 7022J)

<Other resins>

U polymer U-100: Polyarylate resin (manufactured by UNITIKA LTD.)

[Example 1]

A raw material mixture was prepared by charging a glass reactor having a capacity of approximately 570 mL equipped with a reactor stirrer, a reactor heater, and a reactor pressure regulator with 78.29 g (approximately 0.252 mol) of BP-TMC, 38.42g (approximately 0.206 mol) of 4,4'-BP, 107.06 g (approximately 0.500 mol) of DPC, and a 0.04% by mass aqueous solution of cesium carbonate as a catalyst so that the amount of cesium carbonate was 0.5 μmol per 1 mole of the total dihydroxy compounds.

The glass reactor was then evacuated to a pressure of approximately 50 Pa (0.38 Torr) and was then filled with nitrogen to atmospheric pressure. This operation was performed three times to purge the reactor with nitrogen. After the nitrogen purge, the external temperature of the reactor was increased to 220°C to gradually increase the internal temperature of the reactor and dissolve the mixture. The stirrer was then rotated at 100 rpm. The absolute pressure in the reactor was then reduced from 101.3 kPa (760 Torr) to 13.3 kPa (100 Torr) over 40 minutes while distilling off a by-product phenol of an oligomerization reaction between the dihydroxy compounds and DPC in the reactor.

A transesterification reaction was then performed for 80 minutes while maintaining the pressure in the reactor at 13.3 kPa and further distilling off the phenol. The external temperature of the reactor was then increased to 300°C, and the absolute pressure in the reactor was reduced from 13.3 kPa (100 Torr) to 399 Pa (3 Torr) over 40 minutes to remove the distilled phenol from the system. Furthermore, the absolute pressure in the reactor was reduced to 30 Pa (approximately 0.2 Torr) to perform a polycondensation reaction. The polycondensation reaction was completed when the reactor stirrer had a predetermined stirring power.

The reactor was then filled with nitrogen to an absolute pressure of 101.3 kPa and was pressured to a gauge pressure of 0.2 MPa. A strand of the polycarbonate resin was drawn out from the bottom of the reactor and was pelletized with a rotary cutter.

This polycarbonate resin contains 55 mol% of the carbonate structural units (X) and 45 mol% of the carbonate structural units (Y), and the containing molar ratio (Y)/(X) is 0.82.

The viscosity-average molecular weight, glass transition temperature and Q value of the thus produced polycarbonate resin were measured. In addition, a sample having a thickness of 3.2 mm, a length of 53.5 mm, and a width of 12.7 mm was produced using a small injection molding machine (Shinko Sellbic Co., Ltd., C, Mobile) under the conditions of a cylinder temperature of 360°C and a mold temperature of 120°C. A notched Izod impact strength of this sample was measured. The results are shown in Table 1.

[Example 2]

The method described in Example 1 was performed in the same manner except that 83.37 g (approximately 0.269 mol) of BP-TMC, 33.34 g (approximately 0.179 mol) of 4,4'-BP, 100.68 g (approximately 0.470 mol) of DPC, and a 0.04% by mass aqueous solution of cesium carbonate as a catalyst were added so that the amount of cesium carbonate was 1.0 umol per 1 mol of the total dihydroxy compounds to prepare a raw material mixture.

The viscosity-average molecular weight, glass transition temperature and Q value of the thus produced

polycarbonate resin were measured. In addition, a sample having a thickness of 3.2 mm, a length of 53.5 mm, and a width of 12.7 mm was produced using a small injection molding machine (Shinko Sellbic Co., Ltd., C, Mobile) under the conditions of a cylinder temperature of 370°C and a mold temperature of 125°C. A notched Izod impact strength of this sample was measured. The results are shown in Table 1.

[Example 3]

The method described in Example 1 was performed in the same manner except that 88.22g (approximately 0.284mol) of BP-TMC, 28.49g (approximately 0.153mol) of 4,4'-BP, 102.08g (approximately 0.477mol) of DPC, and a 0.04% by mass aqueous solution of cesium carbonate as a catalyst were added so that the amount of cesium carbonate was 0.5 μmol per 1 mol of the total dihydroxy compounds to prepare a raw material mixture.

The viscosity-average molecular weight, glass transition temperature and Q value of the thus produced polycarbonate resin were measured. In addition, a sample having a thickness of 3.2 mm, a length of 53.5 mm, and a width of 12.7 mm was produced using a small injection molding machine (Shinko Sellbic Co., Ltd., C, Mobile) under the conditions of a cylinder temperature of 360°C and a mold temperature of 120°C. A notched Izod impact strength of this sample was measured. The results are shown in Table 1.

[Example 4]

The method described in Example 1 was performed in the same manner except that 92.84 g (approximately 0.299 mol) of BP-TMC, 23.87 g (approximately 0.128 mol) of 4,4'-BP, 97.93 g (approximately 0.457 mol) of DPC, and a 0.04% by mass aqueous solution of cesium carbonate as a catalyst were added so that the amount of cesium carbonate was 0.5 μmol per 1 mol of the total dihydroxy compounds to prepare a raw material mixture.

The viscosity-average molecular weight, glass transition temperature and Q value of the thus produced polycarbonate resin were measured. In addition, a sample having a thickness of 3.2 mm, a length of 53.5 mm, and a width of 12.7 mm was produced using a small injection molding machine (Shinko Sellbic Co., Ltd., C, Mobile) under the conditions of a cylinder temperature of 360°C and a mold temperature of 120°C. A notched Izod impact strength of this sample was measured. The results are shown in Table 1.

[Example 5,6]

The method described in Example 1 was performed in the same manner except that 59.32g (approximately 0.191mol) of BP-TMC, 21.81g (approximately 0.096mol) of BPA, 35.58g (approximately 0.191mol) of 4,4'-BP, 111.54g (approximately 0.521 mol) of DPC, and a 0.04% by mass aqueous solution of cesium carbonate as a catalyst were added so that the amount of cesium carbonate was 0.5 μmol per 1 mol of the total dihydroxy compounds to prepare a raw material mixture.

The viscosity-average molecular weight, glass transition temperature and Q value of the thus produced polycarbonate resin were measured. In addition, a sample having a thickness of 3.2 mm, a length of 53.5 mm, and a width of 12.7 mm was produced using a small injection molding machine (Shinko Sellbic Co., Ltd., C, Mobile) under the conditions of a cylinder temperature of 340°C and a mold temperature of 120°C. A notched Izod impact strength of this sample was measured. The results are shown in Table 1.

[Comparative Example 1]

The method described in Example 1 was performed in the same manner except that 45.66g (approximately 0.147mol)of BP-TMC, 62.36g (approximately 0.273mol) of BPA, 8.69g (approximately 0.047mol) of 4,4'-BP, 105.02g (approximately 0.490 mol) of DPC, and a 0.4% by mass aqueous solution of cesium carbonate as a catalyst were added so that the amount of cesium carbonate was 1.0 μmol per 1 mol of the total dihydroxy compounds to prepare a raw material mixture.

The viscosity-average molecular weight, glass transition temperature and Q value of the thus produced polycarbonate resin were measured. In addition, a sample having a thickness of 3.2 mm, a length of 53.5 mm, and a width of 12.7 mm was produced using a small injection molding machine (Shinko Sellbic Co., Ltd., C, Mobile) under the conditions of a cylinder temperature of 340°C and a mold temperature of 120°C. A notched Izod impact strength of this sample was measured. The results are shown in Table 1.

[Comparative Example 2]

The method described in Example 1 was performed in the same manner except that 78.32 g (approximately

0.252 mol) of BP-TMC, 38.39 g (approximately 0.168 mol) of BPA, 94.57 g (approximately 0.442 mol) of DPC, and a 0.04% by mass aqueous solution of cesium carbonate as a catalyst were added so that the amount of cesium carbonate was 0.5 μmol per 1 mol of the total dihydroxy compounds to prepare a raw material mixture.

The viscosity-average molecular weight, glass transition temperature and Q value of the thus produced polycarbonate resin were measured. In addition, a sample having a thickness of 3.2 mm, a length of 53.5 mm, and a width of 12.7 mm was produced using a small injection molding machine (Shinko Sellbic Co., Ltd., C, Mobile) under the conditions of a cylinder temperature of 360°C and a mold temperature of 120°C. A notched Izod impact strength of this sample was measured. The results are shown in Table 1.

[Comparative Example 3]

U-polymer U-100 was used as the polyarylate resin (PAR1). The glass transition temperature and Q value of PAR1 were measured. In addition, a sample having a thickness of 3.2 mm, a length of 53.5 mm, and a width of 12.7 mm was produced using a small injection molding machine (Shinko Sellbic Co., Ltd., C, Mobile) under the conditions of a cylinder temperature of 400°C and a mold temperature of 130°C. A notched Izod impact strength of this sample was measured. The results are shown in Table 1.

[Example 7]

As the polycarbonate resin (PC1), a resin newly prepared by the method of Example 2 (viscosity-average molecular weight 15,060) was used. Furthermore, A-PC (viscosity-average molecular weight 21,000) was used as the polycarbonate resin (PC2). PC1 and PC2 were melt-kneaded in a small twin-screw kneading extruder (Technovel Corporation, KZW15TW) at the weight ratio shown in Table 2, extruded from the outlet of the twin-screw extruder into a strand shape, cooled and solidified with water, and pelletized with a rotary cutter to obtain a polycarbonate resin composition. At this time, the barrel temperature of the twin-screw extruder was 320°C, and the polycarbonate resin temperature at the outlet of the twin-screw extruder was 305°C. During melt-kneading, the vent port of the twin-screw extruder was connected to a vacuum pump, and the pressure at the vent port was controlled to be 20 kPa. In addition, the viscosity-average molecular weight, glass transition temperature, and Q value of the polycarbonate resin composition were measured. Furthermore, from the polycarbonate resin composition, a sample having a thickness of 3.2 mm, a length of 53.5 mm, and a width of 12.7 mm was produced using a small injection molding machine (Shinko Sellbic Co., Ltd., C, Mobile) under the conditions of a cylinder temperature of 340°C and a mold temperature of 120°C. A notched Izod impact strength of this sample was measured. The results are shown in Table 2.

[Table 1]

| | | Example | | | | | | Comparative Example | | |
|---|---|---|---|---|---|---|---|---|---|---|
| | | 1 | 2 | 3 | 4 | 5 | 6 | 1 | 2 | 3 |
| Aromatic Dihydroxy Compound [mol%] | BP-TMC (Carbonate Structural Unit (X)) | 55 | 60 | 65 | 70 | 40 | 40 | 31.5 | 60 | PAR1 |
| | 4,4'-BP (Carbonate Structural Unit (Y)) | 45 | 40 | 35 | 30 | 40 | 40 | 10 | 0 | |
| | BPA | 0 | 0 | 0 | 0 | 20 | 20 | 58.5 | 40 | |
| Containing Molar Ratio (Y)/(X) | | 0.82 | 0.67 | 0.54 | 0.43 | 1.00 | 1.00 | 0.32 | 0 | |
| Viscosity-Average Molecular Weight(Mv) | | 17100 | 14380 | 15300 | 15500 | 20400 | 17900 | 19330 | 18800 | - |
| Glass Transition Temperature Tg[°C] | | A | A | A | A | A | A | C | A | A |
| | | 204 | 208 | 208 | 212 | 193 | 191 | 180 | 197 | 193 |
| Notched Izod Impact Strength[J/m] | | A | B | B | B | A | A | B | C | A |
| | | 91 | 72 | 65 | 63 | 184 | 125 | 79 | 50 | 266 |

(continued)

| | Example | | | | | | Comparative Example | | |
|---|---|---|---|---|---|---|---|---|---|
| | 1 | 2 | 3 | 4 | 5 | 6 | 1 | 2 | 3 |
| Q Value [$\times 10^{-2} cm^3/sec$], 320°C, 160kgf | A | A | A | A | A | A | A | A | C |
| | 6.1 | 8.6 | 8.2 | 6.7 | 4.7 | 10.2 | 13.2 | 9.4 | 0.8 |

[Table 2]

| | | Example |
|---|---|---|
| | | 7 |
| Polycarbonate Resin Blend Weight Ratio[wt%] | PC 1 | 80 |
| | PC 2 | 20 |
| Blend Molar Ratio in terms of Structural Units[mol%] | PC 1 | 77 |
| | PC 2 | 23 |
| Content Rate of Each Carbonate Structural Unit[mol%] | BP-TMC (Carbonate Structural Unit (X)) | 46 |
| | 4,4'-BP (Carbonate Structural Unit (Y)) | 31 |
| | BPA | 23 |
| Containing Molar Ratio (Y)/(X) | | 0.67 |
| Viscosity-Average Molecular Weight(Mv) | | 15830 |
| Glass Transition Temperature Tg[°C] | | B |
| | | 186 |
| Notched Izod Impact Strength[J/m] | | B |
| | | 77 |
| Q Value [$\times 10^{-2} cm^3/sec$], 320°C, 160kgf | | A |
| | | 15.3 |

[Consideration]

From the above results, the following can be understand.

In Examples 1 to 6 which are the first embodiment, since these satisfy the requirement of the first embodiment that the content of BP-TMC (carbonate structural unit (X)) in the polycarbonate resin composition is 31.6 mol% or more, and containing 4,4'-BP (carbonate structural unit (Y)), all of the impact resistance, heat resistance, and fluidity were high.

In addition, since Examples 1 to 6 satisfy the requirement of the second embodiment that the containing molar ratio (Y) of 4,4'-BP (carbonate structural unit (Y)) to BP-TMC (carbonate structural unit (X)) is in the range of 0.33 or more and 2.95 or less, all of the impact resistance, heat resistance, and fluidity were high.

In Example 7, even if it is a blend resin with A-PC, since it satisfies the requirement of the first embodiment that the content of BP-TMC (carbonate structural unit (X)) in the polycarbonate resin composition is 31.6 mol% or more, and containing 4,4'-BP (carbonate structural unit (Y)), all of the impact resistance, heat resistance, and fluidity were high.

In addition, in Example 7, even if it is a blend resin with A-PC, since it 7 satisfies the requirement of the second embodiment that the containing molar ratio (Y) of 4,4'-BP (carbonate structural unit (Y)) to BP-TMC (carbonate structural unit (X)) is in the range of 0.33 or more and 2.95 or less, all of the impact resistance, heat resistance, and fluidity were high.

Comparative Example 1 dose not satisfy the requirements of the first embodiment because the content of BP-TMC (carbonate structural unit (X)) is less than 31.6 mol%, resulting in poor heat resistance.

Furthermore, in Comparative Example 1, since the containing molar ratio (Y)/(X) is less than 0.33, it does not satisfy the requirements of the second embodiment, resulting in poor heat resistance.

In Comparative Example 2, in which the content of BP-TMC (carbonate structural unit (X)) of 31.6 mol% or more, but does not contain 4,4'-BP (carbonate structural unit (Y)), since the requirements of the first embodiment is not satisfied, the result is poor impact resistance.

Furthermore, in Comparative Example 2, since the containing molar ratio (Y)/(X) was 0, it does not satisfy the

requirements of the second embodiment, the result is poor heat resistance.

From the above results, it can be seen that the polycarbonate resin composition of the present invention has excellent heat resistance, impact resistance, and fluidity (moldability).

Although the present invention has been described in detail with reference to particular embodiments, it will be apparent to those skilled in the art that various modifications may be made therein without departing from the spirit and scope of the present invention.

The present application is based on Japanese Patent Application No. 2022-017293 filed on February 7, 2022, which is incorporated herein by reference in their entirety.

## Claims

1. A polycarbonate resin composition comprising a carbonate structural unit (X) derived from an aromatic dihydroxy compound represented by the following formula (1), and a carbonate structural unit (Y) derived from an aromatic dihydroxy compound represented by the following formula (2),
   wherein the content of the carbonate structural unit (X) in 100 mol% of all carbonate structural units of the polycarbonate resin composition is 31.6 mol% or more.

[Chem. 1]

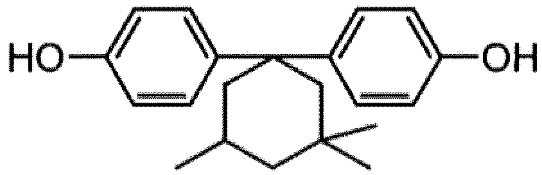

(1)

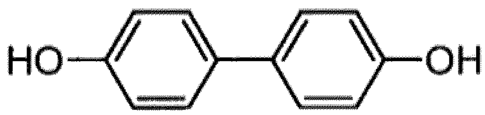

(2)

2. A polycarbonate resin composition comprising a carbonate structural unit (X) derived from an aromatic dihydroxy compound represented by the following formula (1), and a carbonate structural unit (Y) derived from an aromatic dihydroxy compound represented by the following formula (2),
   wherein a molar ratio (Y)/(X) of the content of the carbonate structural unit (Y) to the carbonate structural unit (X) is 0.33 or more and 2.95 or less.

[Chem. 2]

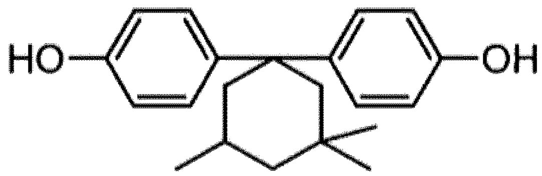

(1)

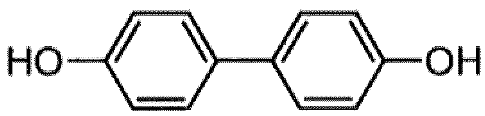

(2)

3. The polycarbonate resin composition according to claim 1 or 2, wherein the content of the carbonate structural unit (Y) in 100 mol% of all carbonate structural units is 15 mol% or more.

4. The polycarbonate resin composition according to any one of claims 1 to 3, having a glass transition temperature of 185°C or higher determined, in accordance with ISO 3146, by measuring the amount of heat by heating at a heating rate of 20°C/min using a differential scanning calorimeter.

5. The polycarbonate resin composition according to any one of claims 1 to 4, having a notched Izod impact strength value of 60 J/m or more as measured by a method in accordance with ASTM D256.

6. The polycarbonate resin composition according to any one of claims 1 to 5, having a flow value (Q value) of 2.0 (unit: $10^{-2}cm^3/sec$) or more measured using a raised-type flowtester in accordance with JIS K7210-1 Annex JA, at 320°C and 160kgf.

7. The polycarbonate resin composition according to any one of claims 1 to 6, having a viscosity-average molecular weight (Mv) of 13,000 or more and 33,000 or less.

8. An injection molded product obtained by injection molding the polycarbonate resin composition according to any one of claims 1 to 7.

9. An extrusion molded product obtained by extrusion molding the polycarbonate resin composition according to any one of claims 1 to 7.

10. The extrusion molded product according to claim 9, wherein the extrusion molded product is a sheet or a film.

**INTERNATIONAL SEARCH REPORT**

International application No. **PCT/JP2023/002418**

**A. CLASSIFICATION OF SUBJECT MATTER**

***C08G 64/06***(2006.01)i
FI: C08G64/06

According to International Patent Classification (IPC) or to both national classification and IPC

**B. FIELDS SEARCHED**

Minimum documentation searched (classification system followed by classification symbols)

C08G64/06

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| X<br>A | JP 2001-520242 A (BAYER AKTIENGESELLSCHAFT) 30 October 2001 (2001-10-30) claims, paragraphs [0027], [0029], examples | 2-10<br>1 |
| A | JP 7-325407 A (KONICA CORP.) 12 December 1995 (1995-12-12) entire text | 1-10 |
| A | DE 10302088 A1 (BAYER AG) 29 July 2004 (2004-07-29) entire text | 1-10 |

☐ Further documents are listed in the continuation of Box C.  ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **14 March 2023** | **28 March 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2023/002418**

| Patent document cited in search report | Publication date (day/month/year) | Patent family member(s) | Publication date (day/month/year) |
|---|---|---|---|
| JP 2001-520242 A | 30 October 2001 | WO 1999/019380 A1<br>claims, p. 5, lines 19-23, p. 5, lines 29-31<br>EP 1023357 A1<br>DE 19744693 A1<br>CN 1266442 A<br>KR 10-2001-0031016 A | |
| JP 7-325407 A | 12 December 1995 | (Family: none) | |
| DE 10302088 A1 | 29 July 2004 | US 2006/0089483 A1<br>entire text<br>WO 2004/065454 A1<br>EP 1587852 A1<br>CN 1738847 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 0359953 B1
- DE 19646401 A1
- JP 2022017293 A